# EUROPÄISCHE PATENTSCHRIFT

(11) **EP 4 251 427 B1**
(45) Veröffentlichungstag und Bekanntmachung des Hinweises auf die Patenterteilung: **16.07.2025**
(21) Anmeldenummer: 21802284.6
(22) Anmeldetag: 28.10.2021
(51) Int. Cl.: B41J 3/407, B41J 29/13, B41J 11/00, B41J 15/04, G01G 19/414, G01G 23/42, G07G 1/00

(54) **ETIKETTENDRUCKER**
LABEL PRINTER
IMPRIMANTE D'ÉTIQUETTES

(30) Priorität: 29.12.2020 EP 20217577
(43) Veröffentlichungstag der Anmeldung: 04.10.2023
(73) Patentinhaber: Bizerba SE & Co. KG, 72336 Balingen (DE)
(72) Erfinder: HAIGIS, Jörg, 72336 Balingen (DE); ECCARD, Patrick, 72393 Burladingen (DE)
(74) Vertreter: Manitz Finsterwald Patent- und Rechtsanwaltspartnerschaft mbB
(86) Internationale Anmeldenummer: PCT/EP2021/079997
(87) Internationale Veröffentlichungsnummer: WO 2022/144119

(56) Entgegenhaltungen:
- JP-A- 2007 106 556
- US-A1- 2014 227 017

## Beschreibung

Die Erfindung betriff einen Etikettendrucker zum Bedrucken eines auf eine Rolle gewickelten Papierbandes, mit einem Druckergehäuse, in dem ein Aufnahmeraum für die Rolle mit dem Papierband oder für eine Kassette mit der Rolle mit dem Papierband vorgesehen ist, wobei das Papierband in einen Papierpfad einlegbar und entlang des Papierpfads transportierbar ist, einem an dem Druckergehäuse angebrachten, zwischen einer geöffneten Stellung und einer geschlossenen Stellung klappbaren Gehäuseelement, insbesondere einer Gehäusetür, das einen Zugriff auf den Aufnahmeraum zum Einsetzen und Entnehmen der Rolle oder der Kassette in der geöffneten Stellung freigibt und in der geschlossenen Stellung verhindert, und einer Steuereinheit, die dazu ausgebildet ist, den Zustand des Etikettendruckers zu erfassen, nämlich ob das Gehäuseelement geschlossen oder die Kassette eingesetzt ist und ob das Papierband in den Papierpfad eingelegt ist.

Die Steuereinheit benötigt verschiedene Sensoren, um den Status des Etikettendruckers festzustellen. Einerseits muss geprüft werden, ob die Druckertür geschlossen ist bzw. ob die Kassette in den Drucker eingelegt ist. Nur in diesem Fall ist der Drucker einsatzfähig. Mit geöffneter Druckertür oder nicht oder nicht vollständig eingelegter Kassette befindet sich der Drucker nicht in einem funktionalen Zustand. Für die Prüfung ist ein Türsensor vorgesehen. Andererseits muss geprüft werden, ob ein Papierband in den Papierpfad eingelegt ist. Nur dann kann gedruckt werden. Befindet sich kein Papierband im Papierpfad, muss das Papierband korrekt in den Papierpfad eingelegt werden. Hierfür ist ein Papiersensor vorgesehen.

Ein Etikettendrucker mit einem Türsensor und einem Papiersensor ist beispielsweise aus dem Dokument EP 2 103 531 A1 bekannt. Der Türsensor umfasst eine Lichtschranke mit einem Sender und einem Empfänger, die an dem Druckergehäuse vorgesehen ist und die in der geschlossenen Stellung durch einen an der Druckertür vorgesehenen Vorsprung unterbrechbar ist. Der Papiersensor ist üblicherweise als Gabellichtschranke ausgebildet, bei der der Sender und der Empfänger in einer U-Form vorliegen, wobei der Rand des Papierbandes zwischen dem Sender und dem Empfänger hindurchgeführt ist. Eine derartige Sensorik mit zwei Sendern und zwei Empfängern ist jedoch teuer, d.h. mit entsprechend hohen Herstellungskosten verbunden. Ein Etikettendrucker mit den Merkmalen des Oberbegriffs des Anspruchs 1 ist aus dem Dokument JP 2007 106556 A bekannt. Das Dokument US 2014/0227017 A1 offenbart einen Etikettendrucker mit einem Gehäuse und einem klappbaren Gehäuseelement. In dem Gehäuse ist eine Reflexionslichtschranke mit einem Lichtsender und einem Lichtempfänger vorgesehen, in dem klappbaren Gehäuseelement eine reflektierende Platte.

Der Erfindung liegt die Aufgabe zugrunde, einen Etikettendrucker der eingangs genannter Art anzugeben, der eine kostengünstigere Möglichkeit bietet, die Erfassung des Zustands des Etikettendruckers vorzunehmen.

Diese Aufgabe wird durch einen Etikettendrucker mit den Merkmalen des Anspruchs 1 gelöst, und insbesondere dadurch, dass eine Reflexionslichtschranke mit einem Lichtsender zum Aussenden eines Sendelichtstrahls und einem Lichtempfänger zum Empfangen eines reflektierten Anteil des Sendelichtstrahls sowie ein weiterer Lichtempfänger zum Empfangen eines transmittierten Anteils des Sendelichtstrahls vorgesehen sind, wobei die Reflexionslichtschranke an dem Druckergehäuse und der weitere Lichtempfänger an dem Gehäuseelement oder der Kassette vorgesehen ist, oder umgekehrt, d.h. die Reflexionslichtschranke an dem Gehäuseelement oder der Kassette und der weitere Lichtempfänger an dem Druckergehäuse vorgesehen ist, und wobei im geschlossenen Zustand des Gehäuseelements die Reflexionslichtschranke und der weitere Lichtempfänger auf zwei einander gegenüberliegenden Seiten des Papierpfads angeordnet sind, und dass die Steuereinheit dazu ausgebildet ist, den Zustand des Etikettendruckers basierend auf einer gemeinsamen Auswertung der Empfangsintensität des Lichtempfängers der Reflexionslichtschranke und der Empfangsintensität des weiteren Lichtempfängers zu erfassen.

Erfindungsgemäß sind lediglich ein Sender und zwei Empfänger erforderlich. Gegenüber aus dem Stand der Technik bekannten Etikettendruckern kann ein Sender eingespart werden. Die spezielle Platzierung und Anordnung der Reflexionslichtschranke und des weiteren Empfängers ermöglicht, dass auf einen zweiten Sender verzichtet werden kann. Mit anderen Worten kann der Sender des Papiersensors auch zur Detektion, ob das Gehäuseelement geschlossen und/oder die Kassette eingesetzt ist, verwendet werden bzw. kann der Sender des Türsensors auch zur Detektion, ob das Papierband in den Papierpfad eingelegt ist, verwendet werden. Letztlich werden gemäß der Erfindung der Türsensor oder der Etikettensensor miteinander kombiniert.

Die gemeinsame Auswertung der beiden Empfangsintensitäten bedeutet, dass sowohl die Empfangsintensität des Lichtempfängers der Reflexionslichtschranke als auch die Empfangsintensität des weiteren Lichtempfängers ausgewertet werden müssen, um den Zustand des Etikettendruckers zu erfassen. Die Auswertung lediglich der Empfangsintensität des Lichtempfängers der Reflexionslichtschranke oder lediglich der Empfangsintensität des weiteren Lichtempfängers ist hierzu nicht ausreichend.

Wie bereits erwähnt kann die Rolle mit dem Papierband auch in einer Kassette, die auch als Bandkassette bezeichnet wird, enthalten sein, wobei die Kassette in dem Aufnahmeraum aufnehmbar ist. Bei dem Aufnahmeraum handelt es sich dann um ein Kassettenfach. Bei Verwendung einer Kassette kann anstelle der Prüfung, ob die Druckertür geschlossen ist, geprüft werden, ob die Kassette eingesetzt ist. Die Prüfung, ob die Kassette eingesetzt ist, schließt die Prüfung, ob die Druckertür geöffnet ist, nicht aus, und umgekehrt.

Das Erfassen des Zustands, dass das Papierband nicht in den Papierpfad eingelegt ist, kann bedeuten, dass nach dem Einlegen der Rolle oder der Kassette in den Aufnahmeraum, insbesondere einem Wechsel der Rolle oder der Kassette, das Papierband von dem Bediener noch nicht in den Papierpfad eingelegt wurde, oder dass das Papierende erreicht ist.

Bei dem Lichtsender kann es sich beispielsweise um eine Laserdiode handeln, die insbesondere eine Wellenlänge im sichtbaren roten Lichtbereich oder Infrarotlichtbereich besitzt. Bei den beiden Empfängern kann es sich beispielsweise um eine Fotodiode oder einen Fototransistor handeln. Der Sendelichtstrahl kann moduliert sein, um die Empfindlichkeit der beiden Lichtempfänger gegenüber Fremdlicht, insbesondere Umgebungslicht, zu reduzieren. Aus diesem Grund kann vor den beiden Lichtempfängern auch jeweils ein Filter angeordnet sein, mit dem beispielsweise Fremdlicht im sichtbaren Bereich herausgefiltert werden kann.

Grundsätzlich ist es auch möglich, dass der weitere Lichtempfänger Teil einer weiteren Reflexionslichtschranke mit einem weiteren Lichtsender ist, wobei vorgesehen ist, dass der weitere Lichtsender inaktiv ist bzw. nicht verwendet wird. Gegenüber dem Stand der Technik ergibt sich dabei weiterhin der Vorteil geringerer Kosten, da der weitere Lichtsender nicht verschaltet, nicht betrieben und nicht gewartet werden muss.

Der Etikettendrucker umfasst einen Druckkopf und ein Gegenelement hierzu, insbesondere eine Druckwalze, wobei der Papierpfad derart vorgegeben ist, dass das Papierband zwischen dem Druckkopf und dem Gegenelement hindurchführbar ist. Die Reflexionslichtschranke und der weitere Lichtempfänger sind in Transportrichtung des Papierbandes gesehen dem Druckkopf und dem Gegenelement, insbesondere in einem Abstand von nicht mehr als 10 cm, insbesondere nicht mehr als 5 cm, vorgeschaltet.

Insbesondere ist die Steuereinheit dazu ausgebildet, bei von dem Lichtsender ausgesandtem Sendelichtstrahl, d.h. wenn von dem Lichtsender ein Sendelichtstrahl ausgesandt wird, zu erfassen, dass das Gehäuseelement geöffnet oder die Kassette nicht eingesetzt ist, wenn die Empfangsintensität des Lichtempfängers der Reflexionslichtschranke kleiner ist als ein vorgegebener Reflexions-Referenzwert und die Empfangsintensität des weiteren Lichtempfängers kleiner ist als ein vorgegebener Transmissions-Referenzwert, und dass andernfalls das Gehäuseelement geschlossen oder die Kassette eingesetzt ist. Bei geöffnetem Gehäuseelement empfangen die beiden Lichtempfänger zumindest im Wesentlichen lediglich Umgebungslicht.

Sofern der weitere Lichtempfänger an der Kassette vorgesehen und die Kassette nicht eingesetzt ist und der weitere Lichtempfänger, insbesondere mangels elektrischen Kontaktes, kein Empfangssignal an die Steuereinheit liefern kann, entspricht dies einem an die Steuereinheit angebundenen weiteren Lichtempfänger, der kein Licht sieht, d.h. eine Empfangsintensität aufweist, die kleiner ist als der vorgegebene Transmissions-Referenzwert, so dass auch in diesem Fall korrekt erfasst werden kann, dass die Kassette nicht eingesetzt ist. Dies gilt entsprechend für den Lichtempfänger der Reflexionslichtschranke, wenn die Reflexionslichtschranke an der Kassette vorgesehen ist, und insbesondere auch, wenn der Lichtsender der Reflexionslichtschranke mangels elektrischen Kontaktes keinen Sendelichtstrahl aussendet.

Die Steuereinheit kann dazu ausgebildet sein, zuvor bei deaktiviertem Lichtsender, d.h. wenn von dem Lichtsender kein Sendelichtstrahl ausgesandt wird, zu erfassen, dass das Gehäuseelement geöffnet oder die Kassette nicht eingesetzt ist, wenn die Empfangsintensität des Lichtempfängers der Reflexionslichtschranke größer ist als ein vorgegebener Reflexions-Grenzwert und/oder die Empfangsintensität des weiteren Lichtempfängers größer ist als ein vorgegebener Transmissions-Grenzwert. Wird bei deaktiviertem Lichtsender Licht empfangen, kann es sich hierbei nur um Fremd- bzw. Umgebungslicht handeln.

Bevorzugt ist dabei vorgesehen, dass der vorgegebene Reflexions-Grenzwert kleiner ist als der vorgegebene Reflexions-Referenzwert und/oder dass der vorgegebene Transmissions-Grenzwert kleiner ist als der vorgegebene Transmissions-Referenzwert. Mit diesem Werten kann die Erfassung des Zustands des Etikettendruckers mit besonders hoher Zuverlässigkeit vorgenommen werden.

Darüber hinaus kann vorgesehen sein, dass - sofern erfasst wurde, dass das Gehäuseelement geschlossen oder die Kassette eingesetzt ist - die Steuereinheit dazu ausgebildet ist, anschließend zu erfassen, ob das Papierband in den Papierpfad eingelegt ist. Die Prüfung, ob das Papierband in den Papierpfad eingelegt ist, kann also der Prüfung, ob das Gehäuseelement geschlossen oder die Kassette eingesetzt ist, zeitlich nachgeordnet sein, und wird insbesondere nur in dem Fall vorgenommen, dass zuvor erfasst wurde, dass das Gehäuseelement geschlossen oder die Kassette eingesetzt ist.

Vorzugsweise ist die Steuereinheit dazu ausgebildet, bei von dem Lichtsender ausgesandtem Sendelichtstrahl zu erfassen, dass das Papierband nicht in den Papierpfad eingelegt ist, wenn die Empfangsintensität des Lichtempfängers der Reflexionslichtschranke kleiner ist als ein vorgegebener Reflexions-Schwellwert oder die Empfangsintensität des weiteren Lichtempfängers größer ist als ein vorgegebener Transmissions-Schwellwert, und dass andernfalls das Papierband in den Papierpfad eingelegt ist. Wenn kein Papierband eingelegt ist, wird lediglich wenig Licht reflektiert, und zwar von dem weiteren Lichtempfänger, der viel Licht von dem Lichtsender empfängt.

Vorzugsweise ist dabei vorgesehen, dass der vorgegebene Reflexions-Schwellwert kleiner ist als der vorgenannte vorgegebene Reflexions-Referenzwert und/oder dass der vorgegebene Transmissions-Schwellwert größer ist als der vorgenannte vorgegebene Transmissions-Referenzwert. Mit diesem Werten kann die Erfassung des Zustands des Etikettendruckers mit besonders hoher Zuverlässigkeit vorgenommen werden.

Insbesondere ist vorgesehen, dass die Steuereinheit dazu ausgebildet ist, den Druckbetrieb des Etikettendruckers zu sperren, wenn aufgrund der gemeinsamen Auswertung der Empfangsintensität des Lichtempfängers der Reflexionslichtschranke und der Empfangsintensität des weiteren Lichtempfängers erfasst wurde, dass das Gehäuseelement geöffnet oder die Kassette nicht eingesetzt ist oder das Papierband nicht in den Papierpfad eingelegt ist. Der Etikettendrucker ist dann nicht druckbereit.

Gemäß einer bevorzugten Ausführungsform ist die Steuereinheit dazu ausgebildet, bei von dem Lichtsender ausgesandtem Sendelichtstrahl basierend auf wenigstens einer der beiden Empfangsintensitäten Papierbandtypen, die in ihrem Reflexionsvermögen und/oder Ihrer Lichtdurchlässigkeit, insbesondere in der Ortsabhängigkeit ihres Reflexionsvermögens und/oder Ihrer Lichtdurchlässigkeit in Bandrichtung, voneinander verschieden sind, voneinander zu unterscheiden. Der Betrieb des Etikettendruckes kann dann an den jeweils erfassten Papierbandtyp angepasst werden. Bei einem Papierbandtyp kann es sich insbesondere um ein Etikettenband oder ein Endlosband handeln. Unter einem Etikettenband sind beispielsweise ein Trägerband mit darauf aufgebrachten selbstklebenden Etiketten, ein selbstklebendes Linerlessband mit Blackmarks sowie ein Trägerband mit darauf aufgebrachten selbstklebenden Etiketten und Blackmarks zu verstehen. Unter einem Endlosband sind beispielsweise ein selbstklebendes Linerlessband ohne Blackmarks und ein nicht-selbstklebendes Bonpapier zu verstehen.

Konkret kann die Steuereinheit dazu ausgebildet sein, bei von dem Lichtsender ausgesandtem Sendelichtstrahl und bei in den Papierpfad eingelegtem und entlang des Papierpfads transportiertem Papierband basierend auf einem zeitlichen Verlauf der Empfangsintensität des weiteren Lichtempfängers, insbesondere über eine vorgegebene Zeitdauer, zu erfassen, ob es sich bei dem Papierband um ein Papierband eines ersten Typs, dessen Lichtdurchlässigkeit in Bandrichtung gemäß einem sich wiederholenden Muster variiert, insbesondere ein Etikettenband, wie es vorstehend erläutert ist, oder um ein Papierband eines zweiten Typs, dessen Lichtdurchlässigkeit in Bandrichtung konstant ist, insbesondere ein Endlosband, wie es vorstehend erläutert ist, handelt. Die vorgegebene Zeitdauer kann sich insbesondere aus einem vorgegebenen Zeitwert oder einer Verrechnung eines vorgegebenen Wegs, um den das Papierband transportiert wird, mit der Transportgeschwindigkeit des Papierbandes ergibt.

Dabei ist es bevorzugt, wenn die Steuereinheit dazu ausgebildet ist, zu erfassen, dass es sich bei dem Papierband um ein Papierband des ersten Typs handelt, wenn der zeitliche Verlauf der Empfangsintensität des weiteren Lichtempfängers von einem ersten Wert auf einen zweiten Wert, der sich von dem ersten Wert um wenigstens eine vorgegebene Referenzdifferenz unterscheidet, wechselt, und dass andernfalls es sich bei dem Papierband um ein Papierband des zweiten Typs handelt. Durch den Wechsel der Empfangsintensität des weiteren Lichtempfängers von dem ersten Wert auf den zweiten Wert kann eine Etikettenlücke erkannt werden. Bleibt der Wert der Empfangsintensität des weiteren Lichtempfängers jedoch innerhalb einer Schwankungsbreite konstant, liegt keine Etikettenlücke vor.

Es kann vorgesehen sein, dass die Reflexionslichtschranke und der weitere Lichtempfänger mittig zu dem Papierpfad angeordnet sind. Damit kann der Etikettendrucker derart betrieben werden, dass das verwendete Papierband immer mittig zu dem Papierpfad ausgerichtet ist und nicht am Rand des Papierpfads anschlagen muss, wie es bei den aus dem Stand der Technik bekannten Gabellichtschranken erforderlich ist. Dies kann insbesondere dann einen Vorteil verschaffen, wenn schmale Papierbänder verwendet werden.

Ferner kann einen Kabelverbindung vorgesehen sein, über die der an dem Gehäuseelement vorgesehene weitere Lichtempfänger oder die an dem Gehäuseelement vorgesehene Reflexionslichtschranke elektrisch an das Druckergehäuse angeschlossen ist. Alternativ oder zusätzlich können elektrische Kontaktierungselemente, z.B. Federkontaktstifte, vorgesehen sein, die einen elektrischen Kontakt zwischen dem Druckergehäuse und dem an der Kassette vorgesehenen weiteren Lichtempfänger oder der an der Kassette vorgesehenen Reflexionslichtschranke herstellen, wenn die Kassette in den Aufnahmeraum eingesetzt ist.

Die Erfindung betrifft ferner eine Waage, insbesondere Ladenwaage, mit einem Etikettendrucker, wie er vorstehend beschrieben ist.

Die Erfindung betrifft weiterhin ein Verfahren zum Betrieb eines Etikettendruckers zum Bedrucken eines auf eine Rolle gewickelten Papierbandes, der Etikettendrucker umfassend ein Druckergehäuse, in dem ein Aufnahmeraum für die Rolle mit dem Papierband oder für eine Kassette mit der Rolle mit dem Papierband vorgesehen ist, wobei das Papierband in einen Papierpfad einlegbar und entlang des Papierpfad transportierbar ist, und ein an dem Druckergehäuse angebrachtes, zwischen einer geöffneten Stellung und einer geschlossenen Stellung klappbares Gehäuseelement, das einen Zugriff auf den Aufnahmeraum zum Einsetzen und Entnehmen der Rolle oder der Kassette in der geöffneten Stellung freigibt und in der geschlossenen Stellung verhindert, wobei bei dem Verfahren mittels einer Steuereinheit der Zustand des Etikettendruckers erfasst wird, nämlich ob das Gehäuseelement geschlossen oder die Kassette eingesetzt ist und ob das Papierband in den Papierpfad eingelegt ist. Das Verfahren zeichnet sich dadurch aus, dass eine Reflexionslichtschranke mit einem Lichtsender und einem Lichtempfänger sowie ein weiterer Lichtempfänger vorgesehen sind, wobei die Reflexionslichtschranke an dem Druckergehäuse und der weitere Lichtempfänger an dem Gehäuseelement oder der Kassette vorgesehen ist, oder umgekehrt, und wobei im geschlossenen Zustand des Gehäuseelements die Reflexionslichtschranke und der weitere Lichtempfänger auf zwei einander gegenüberliegenden Seiten des Papierpfads angeordnet sind, wobei von dem Lichtsender ein Sendelichtstrahl ausgesandt wird, von dem Lichtempfänger der Reflexionslichtschranke ein reflektierter Anteil des Sendelichtstrahls empfangen wird und von dem weiteren Lichtempfänger ein transmittierter Anteil des Sendelichtstrahls empfangen wird, und wobei mittels der Steuereinheit die Empfangsintensität des Lichtempfängers der Reflexionslichtschranke und die Empfangsintensität des weiteren Lichtempfängers gemeinsam ausgewertet werden und basierend auf der gemeinsamen Auswertung der Zustand des Etikettendruckers erfasst wird.

Vorteilhafte Ausführungsformen des erfindungsgemäßen Verfahrens ergeben sich analog zu den vorstehend beschriebenen vorteilhaften Ausführungsformen des erfindungsgemäßen Etikettendruckers.

Weitere vorteilhafte Ausgestaltungen der Erfindung sind in den Unteransprüchen, der Figurenbeschreibung und der Zeichnung beschrieben.

Nicht beschränkende Ausführungsbeispiele der Erfindung sind in der Zeichnung dargestellt und werden nachfolgend beschrieben.

Es zeigen, jeweils in schematischer Darstellung,
- Fig. 1: eine Waage, insbesondere Ladenwaage, mit einem Etikettendrucker gemäß einer ersten Ausführungsform der Erfindung,
- Fig. 2A, B: den Etikettendrucker aus Fig. 1 in Einzeldarstellung von vorne mit einer Druckertür und in einer Darstellung, in der die Druckertür weggelassen ist,
- Fig. 3: die Druckertür aus Fig. 2A im aufgeklappten Zustand,
- Fig. 4: ein Flussdiagramm zur Erkennung des Zustands des Etikettendruckers aus Fig. 1,
- Fig. 5: ein Flussdiagramm zur Erkennung des eingelegten Papierbandtyps,
- Fig. 6: eine Waage, insbesondere Ladenwaage, mit einem Etikettendrucker gemäß einer zweiten Ausführungsform der Erfindung,
- Fig. 7: den Etikettendrucker aus Fig. 6 mit einem Kassettenfach, einer teilweise eingesetzten Bandkassette und teilweise geöffneter Druckertür in einer Draufsicht,
- Fig. 8: den Etikettendrucker aus Fig. 6 in seitlicher Ansicht, wobei die Druckertür weggelassen ist, und
- Fig. 9: die Bankkassette aus Fig. 7 in Einzeldarstellung.

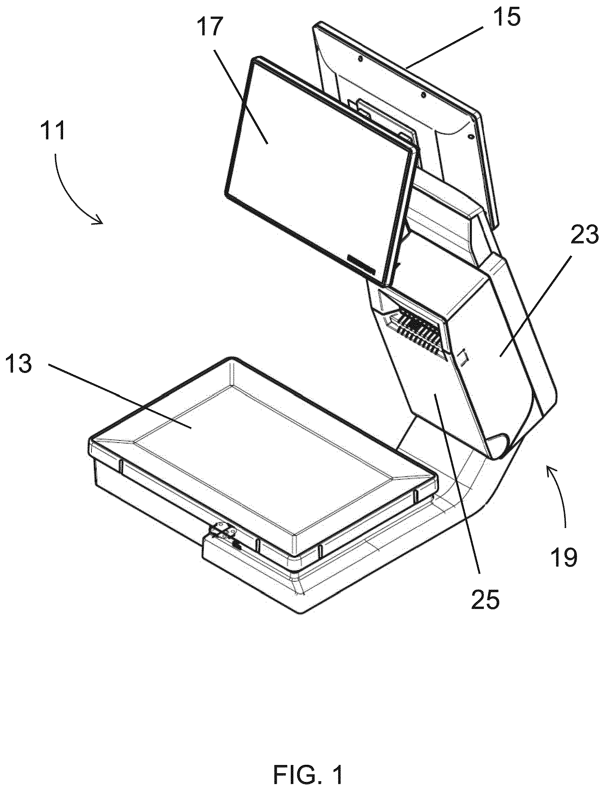

Die in Fig. 1 dargestellte, beispielhafte Ladenwaage 11 umfasst eine Lastplatte 13, welche das Gewicht eines auf ihr liegenden Artikels ermittelt, das sowohl auf einer Anzeige 15 für den Kunden als auch auf einer Anzeige 17 für den Verkäufer angezeigt wird. Die Anzeige 17 ist als Touchscreen ausgebildet, so dass die Ladenwaage 11 hierüber auch bedient werden kann. Über den Touchscreen 17 kann eine dem jeweiligen Artikel zugeordnete Identifikationsnummer (PLU) eingegeben werden, so dass unter Hinzunahme des Gewichts ein Preis für den Artikel berechnet werden kann, welcher dann ebenfalls auf den beiden Anzeigen 15, 17 angezeigt wird. Darüber hinaus umfasst die Ladenwaage einen Etikettendrucker 19, um ein Etikett mit dem Gewicht, dem Namen des Artikels und dem berechneten Preis zu bedrucken.

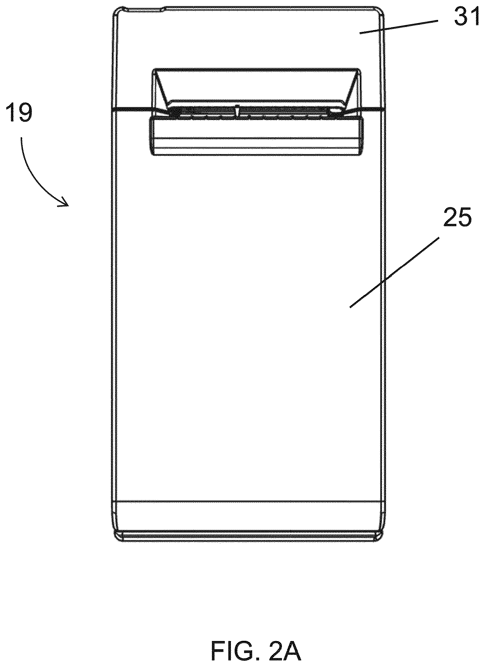

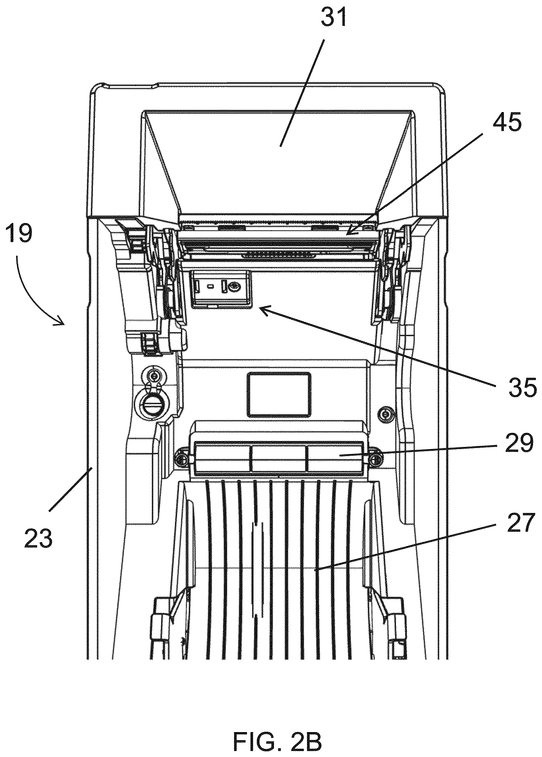

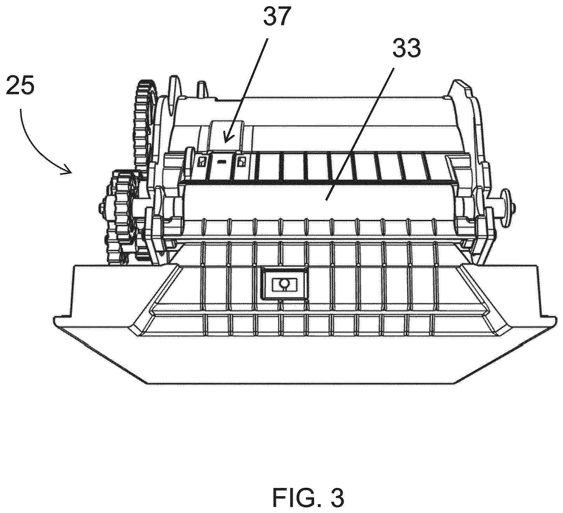

Der Etikettendrucker 19 umfasst ein Druckergehäuse 23 und ein daran gelenkig angebrachtes Gehäuseelement in Form einer Druckertür 25, die zwischen einer geschlossenen Stellung, die in den Fig. 1 und 2A dargestellt ist, und einer geöffneten Stellung, die aus Fig. 3 ersichtlich ist, bewegbar ist. In Fig. 2B ist die Druckertür 25 weggelassen, so dass das Innere des Etikettendruckers 19 einsehbar ist. Im Inneren des Etikettendruckers 19 ist ein Aufnahmeraum 27 sichtbar. Bei geöffneter Druckertür 25 kann eine Rolle mit Papierband, auf das gedruckt wird, in den Aufnahmeraum 27 eingesetzt bzw. kann eine verbrauchte Papierbandrolle aus dem Aufnahmeraum 27 entnommen werden. Nach dem Einsetzen der Rolle wird der Anfang des Papierbandes abgewickelt und in den Papierpfad des Etikettendruckers 19 eingelegt. Das Papierband kann dann über eine angetriebene Druckwalze 33, die an der Innenseite der Druckertür 25 angebracht ist, wie aus Fig. 3 ersichtlich ist, entlang des Papierpfads transportiert werden. Darüber hinaus sind eine Umlenkrolle 29 für das Papierband und ein Druckkopf 45 sichtbar.

Der Etikettendrucker 19 kann mit einem selbstklebenden Linerlessband oder mit einem nicht-selbstklebenden Bonpapier betrieben werden. Deshalb weist der Etikettendrucker 19 einen grundsätzlich bekannten Abschneider auf, der in Fig. 2B jedoch durch ein frontseitiges Abdeckelement 31 verdeckt ist und mit dem einzelne Etiketten von dem Linerlessband bzw. dem Bonpapier abgetrennt werden können. Der Etikettendrucker 19 kann aber auch mit einem Trägerband mit darauf aufgebrachten selbstklebenden Etiketten betrieben werden.

Die nicht sichtbare druckergehäuseseitig angeordnete Steuereinheit ist dazu ausgebildet, den Zustand des Etikettendruckers 19 zu erfassen, nämlich ob die Druckertür 25 geschlossen ist und ob das Papierband in den Papierpfad eingelegt ist. Hierzu umfasst der Etikettendrucker 19 eine druckergehäuseseitig vorgesehene Reflexionslichtschranke 35 (vgl. Fig. 2B) mit einem Lichtsender und einem Lichtempfänger sowie einen druckertürseitig vorgesehenen weiteren Lichtempfänger 37 (vgl. Fig. 3), der über eine Kabelverbindung an die Steuereinheit angeschlossen ist. Die Anordnung kann jedoch auch umgekehrt vorgenommen werden. Die Anordnung ist in beiden Fällen derart, dass, wenn die Druckertür 25 geschlossen ist, die Reflexionslichtschranke 35 und der weitere Lichtempfänger 37 auf zwei einander gegenüberliegenden Seiten des Papierpfads angeordnet sind. Im Betrieb sendet der Lichtsender der Reflexionslichtschranke 35 einen Sendelichtstrahl aus, wobei ein reflektierter Anteil des Sendelichtstrahls durch den Lichtempfänger der Reflexionslichtschranke 35 und ein transmittierter Anteil des Sendelichtstrahls durch den weiteren Lichtempfänger 37 empfangen werden. Die Steuereinheit ist dann dazu ausgebildet, den vorgenannten Zustand des Etikettendruckers 19 basierend auf einer gemeinsamen Auswertung der beiden Empfangsintensitäten des Lichtempfängers der Reflexionslichtschranke 35 und des weiteren Lichtempfängers 37 zu erfassen.

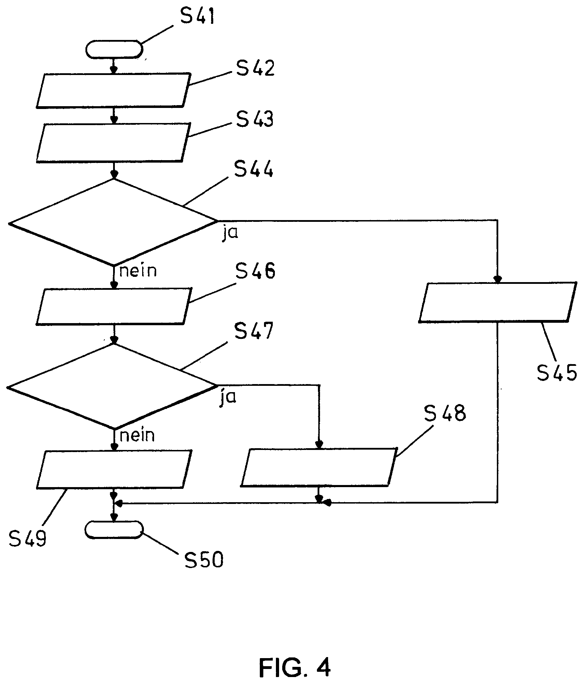

Die Verfahrensschritte, die zur Erkennung des Zustands des Etikettendruckers 19 durchgeführt werden, sind in Fig. 4 dargestellt. In Schritt S41 startet das Verfahren. In Schritt S42 sendet der Lichtsender der Reflexionslichtschranke 35 einen Sendelichtstrahl aus. In Schritt S43 wird von dem Lichtempfänger der Reflexionslichtschranke 35 ein reflektierter Anteil des Sendelichtstrahls detektiert und von dem weiteren Lichtempfänger 37 wird ein transmittierter Anteil des Sendelichtstrahls detektiert. In Schritt S44 wird geprüft, ob die Druckertür 25 offen ist. Hierzu wird geprüft, ob die Empfangssignalintensität des Lichtempfängers der Reflexionslichtschranke 35 kleiner ist als ein vorgegebener Reflexions-Referenzwert, beispielsweise 1.000, und die Empfangsintensität des weiteren Lichtempfängers 37 kleiner ist als ein vorgegebener Transmissions-Referenzwert, beispielsweise 250. Ist dies der Fall, wird gemäß Schritt S45 festgestellt, dass die Druckertür 25 offen ist. Der Etikettendrucker 19 ist nicht druckbereit. Das Verfahren zur Erkennung des Zustands des Etikettendruckers 19 wird gemäß Schritt S50 beendet. Ist dies nicht der Fall, wird gemäß Schritt S46 festgestellt, dass die Druckertür 25 geschlossen ist. In Schritt S47 wird geprüft, ob das Papierband nicht in den Papierpfad eingelegt ist. Hierzu wird geprüft, ob die Empfangsintensität des Lichtempfängers der Reflexionslichtschranke 35 kleiner ist als ein vorgegebener Reflexions-Schwellwert, beispielsweise 900, oder die Empfangsintensität des weiteren Lichtempfängers 37 größer ist als ein vorgegebener Transmissions-Schwellwert, beispielsweise 3.000. Ist dies der Fall, wird gemäß Schritt S48 festgestellt, dass das Papierband nicht in den Papierpfad eingelegt ist. Der Etikettendrucker 19 ist nicht druckbereit. Das Verfahren zur Erkennung des Zustands des Etikettendruckers 19 wird gemäß Schritt S50 beendet. Ist dies nicht der Fall, wird gemäß Schritt S49 festgestellt, dass das Papierband in den Papierpfad eingelegt ist. Der Etikettendrucker 19 ist druckbereit. Das Verfahren zur Erkennung des Zustands des Etikettendruckers 19 wird gemäß Schritt S50 beendet.

Die vorstehend erläuterte Auswertung der beiden Empfangsintensitäten des Lichtempfängers der Reflexionslichtschranke 35 und des weiteren Lichtempfängers 37 erfolgt bei von dem Lichtsender ausgesandtem Sendelichtstrahl, d.h. wenn von dem Lichtsender ein Sendelichtstrahl ausgesandt wird. Zusätzlich kann vorgesehen sein, dass die beiden Empfangsintensitäten des Lichtempfängers der Reflexionslichtschranke 35 und des weiteren Lichtempfängers 37 bereits vor Schritt S42 bei noch deaktiviertem Lichtsender, d.h. wenn von dem Lichtsender noch kein Sendelichtstrahl ausgesandt wird, ausgewertet werden. Es kann dabei erfasst werden, dass die Druckertür 25 offen ist, wenn die Empfangsintensität des Lichtempfängers der Reflexionslichtschranke 35 größer ist als ein vorgegebener Reflexions-Grenzwert, beispielsweise 10, und/oder die Empfangsintensität des weiteren Lichtempfängers 37 größer ist als ein vorgegebener Transmissions-Grenzwert, beispielsweise 10, wie es aufgrund von Fremd- bzw. Umgebungslicht der Fall sein kann. Wird bei deaktiviertem Lichtsender erfasst, dass die Druckertür 25 offen ist, ist der Etikettendrucker 19 nicht druckbereit. Das Verfahren wird gemäß Schritt S50 beendet. Wird bei deaktiviertem Lichtsender nicht erfasst, dass die Druckertür 25 offen ist, fährt das Verfahren mit Schritt S42 fort.

Wie sich aus dem vorstehend erläuterten Verfahren zur Erkennung des Zustands des Etikettendruckers 19 ergibt, wird der Druckbetrieb des Etikettendruckers 19 gesperrt, wenn aufgrund der gemeinsamen Auswertung der Empfangsintensität des Lichtempfängers der Reflexionslichtschranke 35 und der Empfangsintensität des weiteren Lichtempfängers 37 erfasst wurde, dass die Druckertür 25 geöffnet ist oder das Papierband nicht in den Papierpfad eingelegt ist.

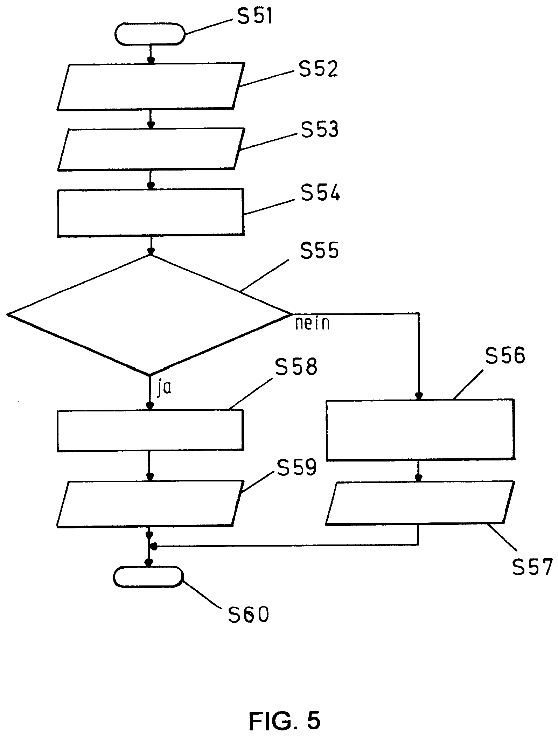

Darüber hinaus kann erfasst werden, welcher Papierbandtyp in dem Etikettendrucker 19 verwendet wird, d.h. ob ein Etikettenband (bei dem die Etikettenlänge der vereinzelten Etiketten vorgegeben ist) oder ein Endlosband (bei dem die Etikettenlänge der vereinzelten Etiketten nicht vorgegeben ist) verwendet wird. Die Verfahrensschritte, die zur Erkennung des verwendeten Papierbandtyps durchgeführt werden, sind in Fig. 5 dargestellt. In Schritt S51 startet das Verfahren. In Schritt S52 wird eine in dem Etikettendrucker 19 hinterlegte maximale Etikettenlänge, beispielsweise 20 cm, eingelesen. In Schritt S53 sendet der Lichtsender der Reflexionslichtschranke 35 einen Sendelichtstrahl aus und das Papierband wird entlang des Papierpfads transportiert. In Schritt S54 wird über die Zeitdauer, bis das Papierband um die hinterlegte Etikettenlänge transportiert wurde, von dem Lichtempfänger der Reflexionslichtschranke 35 ein reflektierter Anteil des Sendelichtstrahls detektiert und von dem weiteren Lichtempfänger 37 ein transmittierter Anteil des Sendelichtstrahls detektiert. In Schritt S55 wird geprüft, ob innerhalb der Zeitdauer die Empfangsintensität des weiteren Lichtempfängers 37 von einem ersten Wert, beispielsweise 1.400 (z.B. Trägerpapier und Etikett), auf einen zweiten Wert, beispielsweise 2.500 (z.B. nur Trägerpapier), der sich von dem ersten Wert um wenigstens eine vorgegebene Referenzdifferenz unterscheidet, wechselt. Ist dies nicht der Fall, wird gemäß Schritt S56 keine Etikettenlücke erkannt. Gemäß Schritt S57 wird festgestellt, dass ein Endlosband verwendet wird. Das Verfahren zur Erkennung des verwendeten Papierbandtyps wird gemäß Schritt S60 beendet. Ist dies der Fall, wird gemäß Schritt S58 eine Etikettenlücke erkannt. Gemäß Schritt S59 wird festgestellt, dass ein Etikettenband verwendet wird. Das Verfahren zur Erkennung des Papierbandtyps wird gemäß Schritt S60 beendet.

Die im Zusammenhang mit den Figuren 4 und 5 genannten Werte sind mit Ausnahme der genannten Etikettenlänge als dimensionslose Größen angegeben, da es für die Verfahrensschritte S41 bis S60 lediglich auf das Verhältnis dieser Werte ankommt.

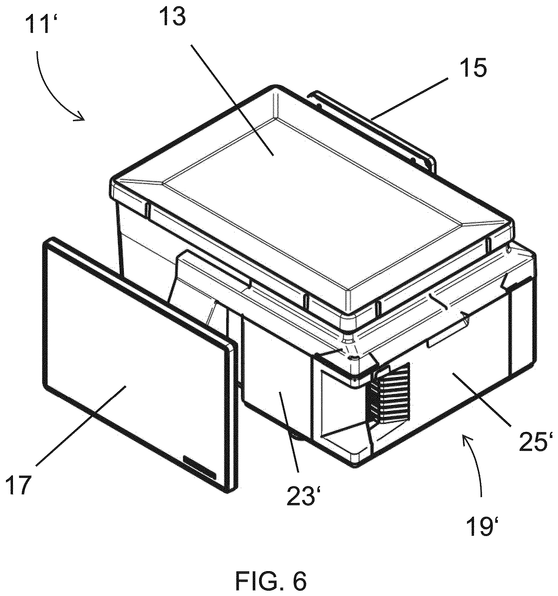

In Fig. 6 ist eine weitere Ladenwaage 11' mit einem weiteren Etikettendrucker 19' dargestellt. Im Gegensatz zu der Ladenwaage gemäß Fig. 1 ist der Etikettendrucker 19' nicht an einem Stativ angeordnet, sondern befindet sich unterhalb der Lastplatte 13. Darüber hinaus sind die Kundenanzeige 15 und der Bediener-Touchscreen 17 im Bereich der Lastplatte 13 angeordnet.

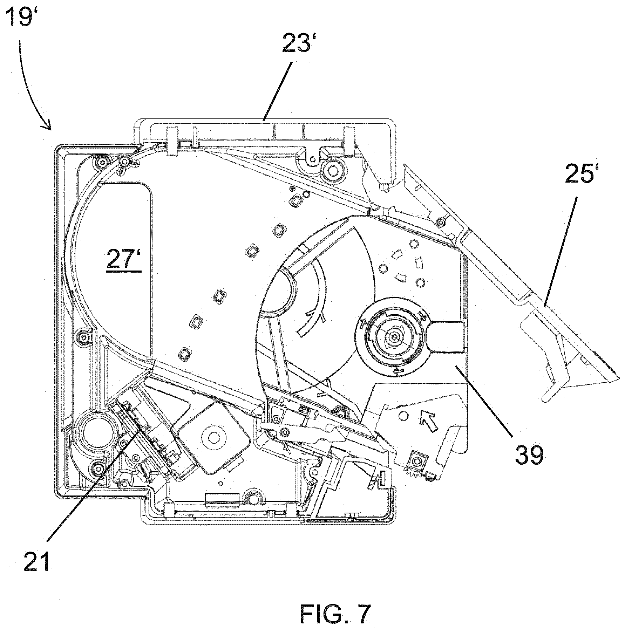

Der Etikettendrucker 19' umfasst gemäß Fig. 7 ebenfalls ein Druckergehäuse 23', in dem ein Aufnahmeraum 27' in Form eines Kassettenfachs ausgebildet ist, in das eine Bandkassette 39 mit einer Rolle mit dem Papierband einsetzbar ist. Darüber hinaus ist auch ein an dem Druckergehäuse 23' um eine Drehachse klappbar angebrachtes Gehäuseelement in Form einer Druckertür 25' vorgesehen, die zwischen einer Offen-Stellung und einer Geschlossen-Stellung verstellbar ist. In der Offen-Stellung der Druckertür 25' ist der Zugang zu dem Aufnahmeraum 27' frei, d.h. die Bandkassette 39 kann in den Aufnahmeraum 27' eingesetzt oder aus dem Aufnahmeraum 27' entnommen werden. In der Geschlossen-Stellung der Druckertür 25' hingegen ist dies nicht der Fall, da der Zugang dann verschlossen ist.

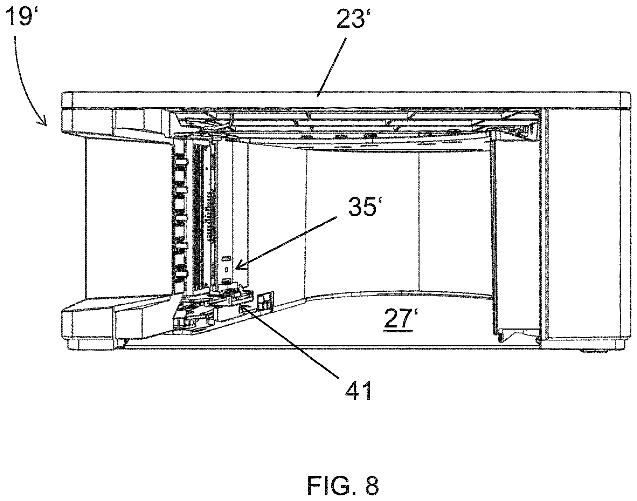

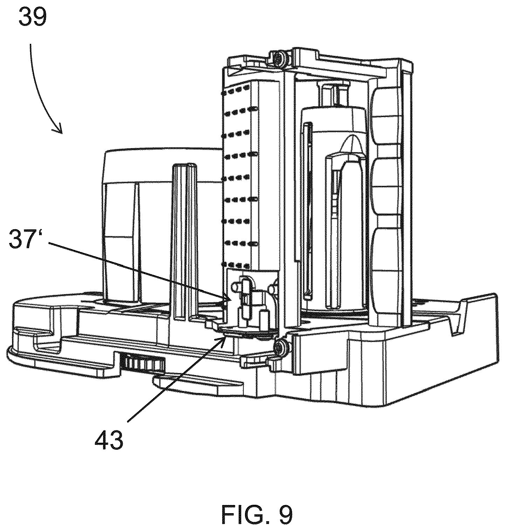

Darüber hinaus ist eine Steuereinheit 21 vorgesehen, die analog zu der Steuereinheit des Etikettendruckers 19 den Zustand des Etikettendruckers 19' erfassen kann, wobei bei dem Etikettendrucker 19' jedoch nicht darauf abgestellt wird, ob die Druckertür 25' geschlossen ist, sondern darauf, ob die Bandkassette 39 in den Aufnahmeraum 27' eingesetzt ist. Hierzu umfasst der Etikettendrucker 19' ebenfalls eine druckergehäuseseitig vorgesehene Reflexionslichtschranke 35' (vgl. Fig. 8) mit einem Lichtsender und einem Lichtempfänger sowie einen druckertürseitig vorgesehenen weiteren Lichtempfänger 37' (vgl. Fig. 9), der über elektrische Kontaktierungselemente 41, z.B. Federkontaktstifte, und entsprechende Kontaktflächen 43 an die Steuereinheit 21 angeschlossen wird. Die Anordnung kann auch hier umgekehrt vorgenommen werden, und die Anordnung ist auch hier in beiden Fällen derart, dass, wenn die Bandkassette 39 eingesetzt ist, die Reflexionslichtschranke 35' und der weitere Lichtempfänger 37' auf zwei einander gegenüberliegenden Seiten eines Papierpfads des Etikettendruckers 19' angeordnet sind.

### Bezugszeichenliste

- 11, 11': Ladenwaage
- 13: Lastplatte
- 15: Kundenanzeige
- 17: Bediener-Touchscreen
- 19, 19': Etikettendrucker
- 21: Steuereinheit
- 23, 23`: Druckergehäuse
- 25, 25': Druckertür
- 27, 27': Aufnahmeraum
- 29: Umlenkrolle
- 31: Abdeckelement
- 33: Druckwalze
- 35, 35': Reflexionslichtschranke
- 37, 37': weiterer Lichtempfänger
- 39: Bandkassette
- 41: elektrische Kontaktierungselemente
- 43: Kontaktflächen
- 45: Druckkopf

- S41-S60: Verfahrensschritt

## Patentansprüche

1. Etikettendrucker zum Bedrucken eines auf eine Rolle gewickelten Papierbandes, mit
einem Druckergehäuse (23, 23'), in dem ein Aufnahmeraum (27, 27') für die Rolle mit dem Papierband oder für eine Kassette (39) mit der Rolle mit dem Papierband vorgesehen ist, wobei das Papierband in einen Papierpfad einlegbar und entlang des Papierpfads transportierbar ist,
einem an dem Druckergehäuse (23, 23') angebrachten, zwischen einer geöffneten Stellung und einer geschlossenen Stellung klappbaren Gehäuseelement (25, 25'), das einen Zugriff auf den Aufnahmeraum (27, 27') zum Einsetzen und Entnehmen der Rolle oder der Kassette (39) in der geöffneten Stellung freigibt und in der geschlossenen Stellung verhindert, und
einer Steuereinheit (21), die dazu ausgebildet ist, den Zustand des Etikettendruckers (19, 19') zu erfassen, nämlich ob das Gehäuseelement (25, 25') geschlossen oder die Kassette (39) eingesetzt ist und ob das Papierband in den Papierpfad eingelegt ist,
wobei eine Reflexionslichtschranke (35, 35') mit einem Lichtsender zum Aussenden eines Sendelichtstrahls und einem Lichtempfänger zum Empfangen eines reflektierten Anteil des Sendelichtstrahls sowie ein weiterer Lichtempfänger (37, 37') zum Empfangen eines transmittierten Anteils des Sendelichtstrahls vorgesehen sind, wobei die Reflexionslichtschranke (35, 35') an dem Druckergehäuse (23, 23') und der weitere Lichtempfänger (37, 37') an dem Gehäuseelement (25, 25') oder der Kassette (39) vorgesehen ist, oder umgekehrt, und wobei im geschlossenen Zustand des Gehäuseelements (25, 25') die Reflexionslichtschranke (35, 35') und der weitere Lichtempfänger (37, 37') auf zwei einander gegenüberliegenden Seiten des Papierpfads angeordnet sind,
**dadurch gekennzeichnet,**
**dass** die Steuereinheit (21) dazu ausgebildet ist, den Zustand des Etikettendruckers (19, 19') basierend auf einer gemeinsamen Auswertung der Empfangsintensität des Lichtempfängers der Reflexionslichtschranke (35, 35') und der Empfangsintensität des weiteren Lichtempfängers (37, 37') zu erfassen.

2. Etikettendrucker nach Anspruch 1,
**dadurch gekennzeichnet,**
**dass** die Steuereinheit (21) dazu ausgebildet ist, bei von dem Lichtsender ausgesandtem Sendelichtstrahl zu erfassen, dass das Gehäuseelement (25, 25') geöffnet oder die Kassette (39) nicht eingesetzt ist, wenn die Empfangsintensität des Lichtempfängers der Reflexionslichtschranke (35, 35') kleiner ist als ein vorgegebener Reflexions-Referenzwert und die Empfangsintensität des weiteren Lichtempfängers (37, 37') kleiner ist als ein vorgegebener Transmissions-Referenzwert, und dass andernfalls das Gehäuseelement (25, 25') geschlossen oder die Kassette (39) eingesetzt ist.

3. Etikettendrucker nach Anspruch 2,
**dadurch gekennzeichnet,**
**dass** die Steuereinheit (21) dazu ausgebildet ist, zuvor bei deaktiviertem Lichtsender, d.h. wenn von dem Lichtsender kein Sendelichtstrahl ausgesandt wird, zu erfassen, dass das Gehäuseelement (25, 25') geöffnet oder die Kassette (39) nicht eingesetzt ist, wenn die Empfangsintensität des Lichtempfängers der Reflexionslichtschranke (35, 35') größer ist als ein vorgegebener Reflexions-Grenzwert und/oder die Empfangsintensität des weiteren Lichtempfängers (37, 37') größer ist als ein vorgegebener Transmissions-Grenzwert,
insbesondere wobei der vorgegebene Reflexions-Grenzwert kleiner ist als der vorgegebene Reflexions-Referenzwert und/oder dass der vorgegebene Transmissions-Grenzwert kleiner ist als der vorgegebene Transmissions-Referenz-wert.

4. Etikettendrucker nach einem der Ansprüche 2 bis 3,
**dadurch gekennzeichnet,**
**dass** - sofern erfasst wurde, dass das Gehäuseelement (25, 25') geschlossen oder die Kassette (39) eingesetzt ist - die Steuereinheit (21) dazu ausgebildet ist, anschließend zu erfassen, ob das Papierband in den Papierpfad eingelegt ist.

5. Etikettendrucker nach einem der vorstehenden Ansprüche,
**dadurch gekennzeichnet,**
**dass** die Steuereinheit (21) dazu ausgebildet ist, bei von dem Lichtsender ausgesandtem Sendelichtstrahl zu erfassen, dass das Papierband nicht in den Papierpfad eingelegt ist, wenn die Empfangsintensität des Lichtempfängers der Reflexionslichtschranke (35, 35') kleiner ist als ein vorgegebener Reflexions-Schwellwert oder die Empfangsintensität des weiteren Lichtempfängers (37, 37') größer ist als ein vorgegebener Transmissions-Schwellwert, und dass andernfalls das Papierband in den Papierpfad eingelegt ist.

6. Etikettendrucker nach einem der Ansprüche 2 bis 4 und Anspruch 5,
**dadurch gekennzeichnet,**
**dass** der vorgegebene Reflexions-Schwellwert kleiner ist als der vorgegebene Reflexions-Referenzwert und/oder dass der vorgegebene Transmissions-Schwellwert größer ist als der vorgegebene Transmissions-Referenzwert.

7. Etikettendrucker nach einem der vorstehenden Ansprüche,
**dadurch gekennzeichnet,**
**dass** die Steuereinheit (21) dazu ausgebildet ist, den Druckbetrieb des Etikettendruckers (19, 19') zu sperren, wenn aufgrund der gemeinsamen Auswertung der Empfangsintensität des Lichtempfängers der Reflexionslichtschranke (35, 35') und der Empfangsintensität des weiteren Lichtempfängers (37, 37') erfasst wurde, dass das Gehäuseelement (25, 25') geöffnet oder die Kassette (39) nicht eingesetzt ist oder das Papierband nicht in den Papierpfad eingelegt ist.

8. Etikettendrucker nach einem der vorstehenden Ansprüche,
**dadurch gekennzeichnet,**
**dass** die Steuereinheit (21) dazu ausgebildet ist, bei von dem Lichtsender ausgesandtem Sendelichtstrahl basierend auf wenigstens einer der beiden Empfangsintensitäten Papierbandtypen, die in ihrem Reflexionsvermögen und/oder Ihrer Lichtdurchlässigkeit, insbesondere in der Ortsabhängigkeit ihres Reflexionsvermögens und/oder Ihrer Lichtdurchlässigkeit in Bandrichtung, voneinander verschieden sind, voneinander zu unterscheiden.

9. Etikettendrucker nach einem der vorstehenden Ansprüche,
**dadurch gekennzeichnet,**
**dass** die Steuereinheit (21) dazu ausgebildet ist, bei von dem Lichtsender ausgesandtem Sendelichtstrahl und bei in den Papierpfad eingelegtem und entlang des Papierpfads transportiertem Papierband basierend auf einem zeitlichen Verlauf der Empfangsintensität des weiteren Lichtempfängers (37, 37'), insbesondere über eine vorgegebene Zeitdauer, zu erfassen, ob es sich bei dem Papierband um ein Papierband eines ersten Typs, dessen Lichtdurchlässigkeit in Bandrichtung gemäß einem sich wiederholenden Muster variiert, insbesondere ein Etikettenband, oder um ein Papierband eines zweiten Typs, dessen Lichtdurchlässigkeit in Bandrichtung konstant ist, insbesondere ein Endlosband, handelt,
insbesondere wobei die Steuereinheit (21) dazu ausgebildet ist, zu erfassen, dass es sich bei dem Papierband um ein Papierband des ersten Typs handelt, wenn der zeitliche Verlauf der Empfangsintensität des weiteren Lichtempfängers (37, 37') von einem ersten Wert auf einen zweiten Wert, der sich von dem ersten Wert um wenigstens eine vorgegebene Referenzdifferenz unterscheidet, wechselt, und dass andernfalls es sich bei dem Papierband um ein Papierband des zweiten Typs handelt.

10. Etikettendrucker nach einem der vorstehenden Ansprüche,
**dadurch gekennzeichnet,**
**dass** die Reflexionslichtschranke (35, 35') und der weitere Lichtempfänger (37, 37') mittig zu dem Papierpfad angeordnet sind.

11. Etikettendrucker nach einem der vorstehenden Ansprüche,
**dadurch gekennzeichnet,**
**dass** eine Kabelverbindung vorgesehen ist, über die der an dem Gehäuseelement (25, 25') vorgesehene weitere Lichtempfänger (37, 37') oder die an dem Gehäuseelement (25, 25') vorgesehene Reflexionslichtschranke (35, 35') elektrisch an das Druckergehäuse (23, 23') angeschlossen ist, und/oder
**dass** elektrische Kontaktierungselemente (41), z.B. Federkontaktstifte, vorgesehen sind, die einen elektrischen Kontakt zwischen dem Druckergehäuse (23, 23') und dem an der Kassette (39) vorgesehenen weiteren Lichtempfänger (37, 37') oder der an der Kassette (39) vorgesehenen Reflexionslichtschranke (35, 35') herstellen, wenn die Kassette (39) in den Aufnahmeraum (27, 27') eingesetzt ist.

12. Waage, insbesondere Ladenwaage, mit einem Etikettendrucker (19, 19') nach einem der vorstehenden Ansprüche.

13. Verfahren zum Betrieb eines Etikettendruckers (19, 19') zum Bedrucken eines auf eine Rolle gewickelten Papierbandes, der Etikettendrucker (19, 19') umfassend
ein Druckergehäuse (23, 23'), in dem ein Aufnahmeraum (27, 27') für die Rolle mit dem Papierband oder für eine Kassette (39) mit der Rolle mit dem Papierband vorgesehen ist, wobei das Papierband in einen Papierpfad einlegbar und entlang des Papierpfads transportierbar ist, und
ein an dem Druckergehäuse (23, 23') angebrachtes, zwischen einer geöffneten Stellung und einer geschlossenen Stellung klappbares Gehäuseelement (25, 25'), das einen Zugriff auf den Aufnahmeraum (27, 27') zum Einsetzen und Entnehmen der Rolle oder der Kassette (39) in der geöffneten Stellung freigibt und in der geschlossenen Stellung verhindert,
wobei bei dem Verfahren mittels einer Steuereinheit (21) der Zustand des Etikettendruckers (19, 19') erfasst wird, nämlich ob das Gehäuseelement (25, 25') geschlossen oder die Kassette (39) eingesetzt ist und ob das Papierband in den Papierpfad eingelegt ist,
wobei eine Reflexionslichtschranke (35, 35') mit einem Lichtsender und einem Lichtempfänger sowie ein weiterer Lichtempfänger (37, 37') vorgesehen sind, wobei die Reflexionslichtschranke (35, 35') an dem Druckergehäuse (23, 23') und der weitere Lichtempfänger (37, 37') an dem Gehäuseelement (25, 25') oder der Kassette (39) vorgesehen ist, oder umgekehrt, und wobei im geschlossenen Zustand des Gehäuseelements (25, 25') die Reflexionslichtschranke (35, 35') und der weitere Lichtempfänger (37, 37') auf zwei einander gegenüberliegenden Seiten des Papierpfads angeordnet sind,
wobei von dem Lichtsender ein Sendelichtstrahl ausgesandt wird, von dem Lichtempfänger der Reflexionslichtschranke (35, 35') ein reflektierter Anteil des Sendelichtstrahls empfangen wird und von dem weiteren Lichtempfänger (37, 37') ein transmittierter Anteil des Sendelichtstrahls empfangen wird,
**dadurch gekennzeichnet,**
**dass** mittels der Steuereinheit (21) die Empfangsintensität des Lichtempfängers der Reflexionslichtschranke (35, 35') und die Empfangsintensität des weiteren Lichtempfängers (37, 37') gemeinsam ausgewertet werden und basierend auf der gemeinsamen Auswertung der Zustand des Etikettendruckers (19, 19') erfasst wird.

14. Verfahren nach Anspruch 13,
**dadurch gekennzeichnet,**
**dass** mittels der Steuereinheit (21) bei von dem Lichtsender ausgesandtem Sendelichtstrahl erfasst wird, dass das Gehäuseelement (25, 25') geöffnet oder die Kassette (39) nicht eingesetzt ist, wenn die Empfangsintensität des Lichtempfängers der Reflexionslichtschranke (35, 35') kleiner ist als ein vorgegebener Reflexions-Referenzwert und die Empfangsintensität des weiteren Lichtempfängers (37, 37') kleiner ist als ein vorgegebener Transmissions-Referenzwert, und dass andernfalls das Gehäuseelement (25, 25') geschlossen oder die Kassette eingesetzt ist.

15. Verfahren nach Anspruch 14,
**dadurch gekennzeichnet,**
**dass** mittels der Steuereinheit (21) zuvor bei deaktiviertem Lichtsender, d.h. wenn von dem Lichtsender kein Sendelichtstrahl ausgesandt wird, erfasst wird, dass das Gehäuseelement (25, 25') geöffnet oder die Kassette (39) nicht eingesetzt ist, wenn die Empfangsintensität des Lichtempfängers der Reflexionslichtschranke (35, 35') größer ist als ein vorgegebener Reflexions-Grenzwert und/oder die Empfangsintensität des weiteren Lichtempfängers (37, 37') größer ist als ein vorgegebener Transmissions-Grenzwert,
insbesondere wobei der vorgegebene Reflexions-Grenzwert kleiner ist als der vorgegebene Reflexions-Referenzwert und/oder dass der vorgegebene Transmissions-Grenzwert kleiner ist als der vorgegebene Transmissions-Referenz-wert.

16. Verfahren nach einem der Ansprüche 14 bis 15,
**dadurch gekennzeichnet,**
**dass** - sofern erfasst wurde, dass das Gehäuseelement (25, 25') geschlossen ist oder die Kassette (39) eingesetzt ist - mittels der Steuereinheit (21) anschließend erfasst wird, ob das Papierband in den Papierpfad eingelegt ist.

17. Verfahren nach einem der Ansprüche 13 bis 16,
**dadurch gekennzeichnet,**
**dass** mittels der Steuereinheit (21) bei von dem Lichtsender ausgesandtem Sendelichtstrahl erfasst wird, dass das Papierband nicht in den Papierpfad eingelegt ist, wenn die Empfangsintensität des Lichtempfängers der Reflexionslichtschranke (35, 35') kleiner ist als ein vorgegebener Reflexions-Schwellwert oder die Empfangsintensität des weiteren Lichtempfängers (37, 37') größer ist als ein vorgegebener Transmissions-Schwellwert, und dass andernfalls das Papierband in den Papierpfad eingelegt ist.

18. Verfahren nach einem der Ansprüche 14 bis 16 und Anspruch 17,
**dadurch gekennzeichnet,**
**dass** der vorgegebene Reflexions-Schwellwert kleiner ist als der vorgegebene Reflexions-Referenzwert und/oder dass der vorgegebene Transmissions-Schwellwert größer ist als der vorgegebene Transmissions-Referenzwert

19. Verfahren nach einem der Ansprüche 13 bis 18,
**dadurch gekennzeichnet,**
**dass** mittels der Steuereinheit (21) der Druckbetrieb des Etikettendruckers (19, 19') gesperrt wird, wenn aufgrund der gemeinsamen Auswertung der Empfangsintensität des Lichtempfängers der Reflexionslichtschranke (35, 35') und der Empfangsintensität des weiteren Lichtempfängers (37, 37') erfasst wurde, dass das Gehäuseelement (25, 25') geöffnet oder die Kassette (39) nicht eingesetzt ist oder das Papierband nicht in den Papierpfad eingelegt ist.

20. Verfahren nach einem der Ansprüche 13 bis 19,
**dadurch gekennzeichnet,**
**dass** mittels der Steuereinheit (21) bei von dem Lichtsender ausgesandtem Sendelichtstrahl basierend auf wenigstens einer der beiden Empfangsintensitäten Papierbandtypen, die in ihrem Reflexionsvermögen und/oder Ihrer Lichtdurchlässigkeit, insbesondere in der Ortsabhängigkeit ihres Reflexionsvermögens und/oder Ihrer Lichtdurchlässigkeit in Bandrichtung, voneinander verschieden sind, voneinander unterschieden werden.

21. Verfahren nach einem der Ansprüche 13 bis 20,
**dadurch gekennzeichnet,**
**dass** mittels der Steuereinheit (21) bei von dem Lichtsender ausgesandtem Sendelichtstrahl und bei in den Papierpfad eingelegtem und entlang des Papierpfads transportiertem Papierband basierend auf einem zeitlichen Verlauf der Empfangsintensität des weiteren Lichtempfängers (37, 37'), insbesondere über eine vorgegebene Zeitdauer, erfasst wird, ob es sich bei dem Papierband um ein Papierband eines ersten Typs, dessen Lichtdurchlässigkeit in Bandrichtung gemäß einem sich wiederholenden Muster variiert, insbesondere ein Etikettenband, oder um ein Papierband eines zweiten Typs, dessen Lichtdurchlässigkeit in Bandrichtung konstant ist, insbesondere ein Endlosband, handelt,
insbesondere wobei mittels der Steuereinheit (21) erfasst wird, dass es sich bei dem Papierband um ein Papierband des ersten Typs handelt, wenn der zeitliche Verlauf der Empfangsintensität des weiteren Lichtempfängers (37, 37') von einem ersten Wert auf einen zweiten Wert, der sich von dem ersten Wert um wenigstens eine vorgegebene Referenzdifferenz unterscheidet, wechselt, und dass andernfalls es sich bei dem Papierband um ein Papierband des zweiten Typs handelt.

## Claims

1. A label printer for printing on a paper tape wound onto a roll, said label printer comprising
a printer housing (23, 23') in which a reception space (27, 27') for the roll with the paper tape or for a cartridge (39) comprising the roll with the paper tape is provided, wherein the paper tape can be placed into a paper path and transported along the paper path;
a housing element (25, 25') which is attached to the printer housing (23, 23'), which is foldable between an open position and a closed position, and which enables access to the reception space (27, 27') for the insertion and removal of the roll or the cartridge (39) in the open position and prevents access in the closed position; and
a control unit (21) which is configured to detect the state of the label printer (19, 19'), namely whether the housing element (25, 25') is closed or the cartridge (39) is inserted and whether the paper tape is placed into the paper path,
wherein a reflection light barrier (35, 35'), comprising a light transmitter for transmitting a transmission light beam and a light receiver for receiving a reflected portion of the transmission light beam, and a further light receiver (37, 37') for receiving a transmitted portion of the transmission light beam are provided, wherein the reflection light barrier (35, 35') is provided at the printer housing (23, 23') and the further light receiver (37, 37') is provided at the housing element (25, 25') or the cartridge (39), or vice versa, and wherein, in a closed state of the housing element (25, 25'), the reflection light barrier (35, 35') and the further light receiver (37, 37') are arranged at two mutually oppositely disposed sides of the paper path,
**characterized in that**
the control unit (21) is configured to detect the state of the label printer (19, 19') based on a joint evaluation of the reception intensity of the light receiver of the reflection light barrier (35, 35') and the reception intensity of the further light receiver (37, 37').

2. A label printer according to claim 1,
**characterized in that**
the control unit (21) is configured to detect, in the case of a transmission light beam transmitted by the light transmitter, that the housing element (25, 25') is open or the cartridge (39) is not inserted when the reception intensity of the light receiver of the reflection light barrier (35, 35') is smaller than a predefined reflection reference value and the reception intensity of the further light receiver (37, 37') is smaller than a predefined transmission reference value, and that otherwise the housing element (25, 25') is closed or the cartridge (39) is inserted.

3. A label printer according to claim 2,
**characterized in that**
the control unit (21) is configured to detect beforehand, when the light transmitter is deactivated, i.e. when no transmission light beam is transmitted by the light transmitter, that the housing element (25, 25') is open or the cartridge (39) is not inserted when the reception intensity of the light receiver of the reflection light barrier (35, 35') is larger than a predefined reflection limit value and/or the reception intensity of the further light receiver (37, 37') is larger than a predefined transmission limit value,
in particular wherein the predefined reflection limit value is smaller than the predefined reflection reference value, and/or **in that** the predefined transmission limit value is smaller than the predefined transmission reference value.

4. A label printer according to one of the claims 2 to 3,
**characterized in that**,
if it has been detected that the housing element (25, 25') is closed or the cartridge (39) is inserted, the control unit (21) is configured to subsequently detect whether the paper tape is placed into the paper path.

5. A label printer according to any one of the preceding claims,
**characterized in that**
the control unit (21) is configured to detect, in the case of a transmission light beam transmitted by the light transmitter, that the paper tape is not placed into the paper path when the reception intensity of the light receiver of the reflection light barrier (35, 35') is smaller than a predefined reflection threshold value or the reception intensity of the further light receiver (37, 37') is larger than a predefined transmission threshold value, and that otherwise the paper tape is placed into the paper path.

6. A label printer according to any one of the claims 2 to 4 and claim 5,
**characterized in that**
the predefined reflection threshold value is smaller than the predefined reflection reference value, and/or **in that** the predefined transmission threshold value is larger than the predefined transmission reference value.

7. A label printer according to any one of the preceding claims,
**characterized in that**
the control unit (21) is configured to block the printing operation of the label printer (19, 19') if it has been detected based on the joint evaluation of the reception intensity of the light receiver of the reflection light barrier (35, 35') and the reception intensity of the further light receiver (37, 37') that the housing element (25, 25') is open or the cartridge (39) is not inserted or the paper tape is not placed into the paper path.

8. A label printer according to any one of the preceding claims,
**characterized in that**
the control unit (21) is configured, in the case of a transmission light beam transmitted by the light transmitter, to distinguish paper tape types from one another, based on at least one of the two reception intensities, that differ from one another in their reflection capability and/or their light transmission, in particular in the location dependence of their reflection capability and/or their light transmission in the tape direction.

9. A label printer according to any one of the preceding claims,
**characterized in that**
the control unit (21) is configured, in the case of a transmission light beam transmitted by the light transmitter and in the case of a paper tape placed into the paper path and transported along the paper path, to detect, based on a time development of the reception intensity of the further light receiver (37, 37'), in particular over a predefined time period, whether the paper tape is a paper tape of a first type whose light transmission varies in the tape direction according to a repeating pattern, in particular a label tape, or a paper tape of a second type whose light transmission is constant in the tape direction, in particular an endless tape,
in particular wherein the control unit (21) is configured to detect that the paper tape is a paper tape of the first type when the time development of the reception intensity of the further light receiver (37, 37') changes from a first value to a second value, which differs from the first value by at least a predefined reference difference, and that otherwise the paper tape is a paper tape of the second type.

10. A label printer according to any one of the preceding claims,
**characterized in that**
the reflection light barrier (35, 35') and the further light receiver (37, 37') are arranged centrally with respect to the paper path.

11. A label printer according to any one of the preceding claims,
**characterized in that**
a cable connection is provided via which the further light receiver (37, 37') provided at the housing element (25, 25') or the reflection light barrier (35, 35') provided at the housing element (25, 25') are electrically connected to the printer housing (23, 23'), and/or
**in that** electrical contacting elements (41), e.g. spring contact pins, are provided that establish an electrical contact between the printer housing (23, 23') and the further light receiver (37, 37') provided at the cartridge (39) or the reflection light barrier (35, 35') provided at the cartridge (39) when the cartridge (39) is inserted into the reception space (27, 27').

12. A scale, in particular a store scale, comprising a label printer (19, 19') according to any one of the preceding claims.

13. A method for operating a label printer (19, 19') for printing on a paper tape wound onto a roll, the label printer (19, 19') comprising
a printer housing (23, 23') in which a reception space (27, 27') for the roll with the paper tape or for a cartridge (39) comprising the roll with the paper tape is provided, wherein the paper tape can be placed into a paper path and transported along the paper path; and
a housing element (25, 25') which is attached to the printer housing (23, 23'), which is foldable between an open position and a closed position, and which enables access to the reception space (27, 27') for the insertion and removal of the roll or the cartridge (39) in the open position and prevents access in the closed position,
wherein, in the method, the state of the label printer (19, 19') is detected by means of a control unit (21), namely whether the housing element (25, 25') is closed or the cartridge (39) is inserted and whether the paper tape is placed into the paper path,
wherein a reflection light barrier (35, 35'), comprising a light transmitter and a light receiver, and a further light receiver (37, 37') are provided, wherein the reflection light barrier (35, 35') is provided at the printer housing (23, 23') and the further light receiver (37, 37') is provided at the housing element (25, 25') or the cartridge (39), or vice versa, and wherein, in a closed state of the housing element (25, 25'), the reflection light barrier (35, 35') and the further light receiver (37, 37') are arranged at two mutually oppositely disposed sides of the paper path,
wherein a transmission light beam is transmitted by the light transmitter, a reflected portion of the transmission light beam is received by the light receiver of the reflection light barrier (35, 35'), and a transmitted portion of the transmission light beam is received by the further light receiver (37, 37'),
**characterized in that**
the reception intensity of the light receiver of the reflection light barrier (35, 35') and the reception intensity of the further light receiver (37, 37') are jointly evaluated by means of the control unit (21) and the state of the label printer (19, 19') is detected based on the joint evaluation.

14. A method according to claim 13,
**characterized in that**
it is detected by means of the control unit (21), in the case of a transmission light beam transmitted by the light transmitter, that the housing element (25, 25') is open or the cartridge (39) is not inserted when the reception intensity of the light receiver of the reflection light barrier (35, 35') is smaller than a predefined reflection reference value and the reception intensity of the further light receiver (37, 37') is smaller than a predefined transmission reference value, and that otherwise the housing element (25, 25') is closed or the cartridge (39) is inserted.

15. A method according to claim 14,
**characterized in that**
it is detected beforehand by means of the control unit (21) when the light transmitter is deactivated, i.e. when no transmission light beam is transmitted by the light transmitter, that the housing element (25, 25') is open or the cartridge (39) is not inserted when the reception intensity of the light receiver of the reflection light barrier (35, 35') is larger than a predefined reflection limit value and/or the reception intensity of the further light receiver (37, 37') is larger than a predefined transmission limit value,
in particular wherein the predefined reflection limit value is smaller than the predefined reflection reference value, and/or **in that** the predefined transmission limit value is smaller than the predefined transmission reference value.

16. A method according to any one of the claims 14 to 15,
**characterized in that**,
if it has been detected that the housing element (25, 25') is closed or the cartridge (39) is inserted, it is subsequently detected by means of the control unit (21) whether the paper tape is placed into the paper path.

17. A method according to any one of the claims 13 to 16,
**characterized in that**
it is detected by means of the control unit (21), in the case of a transmission light beam transmitted by the light transmitter, that the paper tape is not placed into the paper path when the reception intensity of the light receiver of the reflection light barrier (35, 35') is smaller than a predefined reflection threshold value or the reception intensity of the further light receiver (37, 37') is larger than a predefined transmission threshold value, and that otherwise the paper tape is placed into the paper path.

18. A method according to any one of the claims 14 to 16 and claim 17,
**characterized in that**
the predefined reflection threshold value is smaller than the predefined reflection reference value, and/or **in that** the predefined transmission threshold value is larger than the predefined transmission reference value.

19. A method according to any one of the claims 13 to 18,
**characterized in that**
the printing operation of the label printer (19, 19') is blocked by means of the control unit (12) if it has been detected based on the joint evaluation of the reception intensity of the light receiver of the reflection light barrier (35, 35') and the reception intensity of the further light receiver (37, 37') that the housing element (25, 25') is open or the cartridge (39) is not inserted or the paper tape is not placed into the paper path.

20. A method according to any one of the claims 13 to 19,
**characterized in that**,
by means of the control unit (21), in the case of a transmission light beam transmitted by the light transmitter, paper tape types are distinguished from one another, based on at least one of the two reception intensities, that differ from one another in their reflection capability and/or their light transmission, in particular in the location dependence of their reflection capability and/or their light transmission in the tape direction.

21. A method according to any one of the claims 13 to 20,
**characterized in that**,
in the case of a transmission light beam transmitted by the light transmitter and in the case of a paper tape placed into the paper path and transported along the paper path, it is detected by means of the control unit (21), based on a time development of the reception intensity of the further light receiver (37, 37'), in particular over a predefined time period, whether the paper tape is a paper tape of a first type whose light transmission varies in the tape direction according to a repeating pattern, in particular a label tape, or a paper tape of a second type whose light transmission is constant in the tape direction, in particular an endless tape,
in particular wherein it is detected by means of the control unit (21) that the paper tape is a paper tape of the first type when the time development of the reception intensity of the further light receiver (37, 37') changes from a first value to a second value which differs from the first value by at least a predefined reference difference, and that otherwise the paper tape is a paper tape of the second type.

## Revendications

1. Imprimante d'étiquettes pour imprimer une bande de papier enroulée sur un rouleau, comprenant
un boîtier d'imprimante (23, 23') dans lequel est prévu un espace de réception (27, 27') pour le rouleau muni de la bande de papier ou pour une cassette (39) avec le rouleau muni de la bande de papier, la bande de papier pouvant être insérée dans un chemin de papier et pouvant être transportée le long du chemin de papier,
un élément de boîtier (25, 25') monté sur le boîtier d'imprimante (23, 23') et rabattable entre une position ouverte et une position fermée, lequel libère un accès à l'espace de réception (27, 27') pour la mise en place et le retrait du rouleau ou de la cassette (39) dans la position ouverte et l'empêche dans la position fermée, et
une unité de commande (21) conçue pour détecter l'état de l'imprimante d'étiquettes (19, 19'), à savoir pour détecter si l'élément de boîtier (25, 25') est fermé ou si la cassette (39) est mise en place et si la bande de papier est insérée dans le chemin de papier,
dans laquelle
il est prévu une barrière lumineuse à réflexion (35, 35') munie d'un émetteur de lumière pour émettre un faisceau lumineux d'émission et d'un récepteur de lumière pour recevoir une partie réfléchie du faisceau lumineux d'émission, et il est prévu un autre récepteur de lumière (37, 37') pour recevoir une partie transmise du faisceau lumineux d'émission,
la barrière lumineuse à réflexion (35, 35') est prévue sur le boîtier d'imprimante (23, 23') et l'autre récepteur de lumière (37, 37') est prévu sur l'élément de boîtier (25, 25') ou sur la cassette (39), ou inversement, et
dans l'état fermé de l'élément de boîtier (25, 25'), la barrière lumineuse à réflexion (35, 35') et l'autre récepteur de lumière (37, 37') sont disposés sur deux côtés opposés du chemin de papier,
**caractérisée en ce que**
l'unité de commande (21) est conçue pour détecter l'état de l'imprimante d'étiquettes (19, 19') en se basant sur une évaluation conjointe de l'intensité de réception du récepteur de lumière de la barrière lumineuse à réflexion (35, 35') et de l'intensité de réception de l'autre récepteur de lumière (37, 37').

2. Imprimante d'étiquettes selon la revendication 1,
**caractérisée en ce que**
lorsque le faisceau lumineux d'émission est émis par l'émetteur de lumière, l'unité de commande (21) est conçue pour détecter que l'élément de boîtier (25, 25') est ouvert ou que la cassette (39) n'est pas mise en place si l'intensité de réception du récepteur de lumière de la barrière lumineuse à réflexion (35, 35') est inférieure à une valeur de référence de réflexion prédéterminée et si l'intensité de réception de l'autre récepteur de lumière (37, 37') est inférieure à une valeur de référence de transmission prédéterminée, et pour détecter que dans le cas contraire, l'élément de boîtier (25, 25') est fermé ou la cassette (39) est mise en place.

3. Imprimante d'étiquettes selon la revendication 2,
**caractérisée en ce que**
lorsque l'émetteur de lumière est désactivé, c'est-à-dire lorsque l'émetteur de lumière n'émet pas de faisceau lumineux d'émission, l'unité de commande (21) est conçue pour détecter préalablement que l'élément de boîtier (25, 25') est ouvert ou que la cassette (39) n'est pas mise en place si l'intensité de réception du récepteur de lumière de la barrière lumineuse à réflexion (35, 35') est supérieure à une valeur limite de réflexion prédéterminée et/ou si l'intensité de réception de l'autre récepteur de lumière (37, 37') est supérieure à une valeur limite de transmission prédéterminée,
en particulier, la valeur limite de réflexion prédéterminée étant inférieure à la valeur de référence de réflexion prédéterminée et/ou la valeur limite de transmission prédéterminée étant inférieure à la valeur de référence de transmission prédéterminée.

4. Imprimante d'étiquettes selon l'une des revendications 2 à 3,
**caractérisée en ce que**
dans la mesure où il a été détecté que l'élément de boîtier (25, 25') est fermé ou que la cassette (39) est mise en place, l'unité de commande (21) est conçue pour détecter ensuite si la bande de papier est insérée dans le chemin de papier.

5. Imprimante d'étiquettes selon l'une des revendications précédentes,
**caractérisée en ce que**
lorsque le faisceau lumineux d'émission est émis par l'émetteur de lumière, l'unité de commande (21) est conçue pour détecter que la bande de papier n'est pas insérée dans le chemin de papier si l'intensité de réception du récepteur de lumière de la barrière lumineuse à réflexion (35, 35') est inférieure à une valeur seuil de réflexion prédéterminée ou si l'intensité de réception de l'autre récepteur de lumière (37, 37') est supérieure à une valeur seuil de transmission prédéterminée, et pour détecter que dans le cas contraire, la bande de papier est insérée dans le chemin de papier.

6. Imprimante d'étiquettes selon l'une des revendications 2 à 4 et la revendication 5,
**caractérisée en ce que**
la valeur seuil de réflexion prédéterminée est inférieure à la valeur de référence de réflexion prédéterminée, et/ou
**en ce que** la valeur seuil de transmission prédéterminée est supérieure à la valeur de référence de transmission prédéterminée.

7. Imprimante d'étiquettes selon l'une des revendications précédentes,
**caractérisée en ce que**
l'unité de commande (21) est conçue pour bloquer le mode d'impression de l'imprimante d'étiquettes (19, 19') si, en se basant sur l'évaluation conjointe de l'intensité de réception du récepteur de lumière de la barrière lumineuse à réflexion (35, 35') et de l'intensité de réception de l'autre récepteur de lumière (37, 37'), il a été détecté que l'élément de boîtier (25, 25') est ouvert ou que la cassette (39) n'est pas mise en place ou que la bande de papier n'est pas insérée dans le chemin de papier.

8. Imprimante d'étiquettes selon l'une des revendications précédentes,
**caractérisée en ce que**
lorsque le faisceau lumineux d'émission est émis par l'émetteur de lumière, l'unité de commande (21) est conçue pour distinguer, en se basant sur l'une au moins des deux intensités de réception, des types de bande de papier qui diffèrent les uns des autres en ce qui concerne leur pouvoir de réflexion et/ou leur perméabilité à la lumière, en particulier en ce qui concerne la dépendance locale de leur pouvoir de réflexion et/ou de leur perméabilité à la lumière dans la direction de la bande.

9. Imprimante d'étiquettes selon l'une des revendications précédentes,
**caractérisée en ce que**
lorsque le faisceau lumineux d'émission est émis par l'émetteur de lumière et lorsque la bande de papier est insérée dans le chemin de papier et est transportée le long du chemin de papier, l'unité de commande (21) est conçue pour détecter, en se basant sur une évolution dans le temps de l'intensité de réception de l'autre récepteur de lumière (37, 37'), en particulier sur une durée prédéterminée, si la bande de papier est une bande de papier d'un premier type dont la perméabilité à la lumière varie dans la direction de la bande selon un schéma répétitif, en particulier une bande d'étiquettes, ou une bande de papier d'un deuxième type dont la perméabilité à la lumière est constante dans la direction de la bande, en particulier une bande sans fin,
en particulier, l'unité de commande (21) est conçue pour détecter que la bande de papier est une bande de papier du premier type si l'évolution dans le temps de l'intensité de réception de l'autre récepteur de lumière (37, 37') passe d'une première valeur à une deuxième valeur qui diffère de la première valeur d'au moins une différence de référence prédéterminée, et pour détecter que dans le cas contraire, la bande de papier est une bande de papier du deuxième type.

10. Imprimante d'étiquettes selon l'une des revendications précédentes,
**caractérisée en ce que**
la barrière lumineuse à réflexion (35, 35') et l'autre récepteur de lumière (37, 37') sont disposés au centre par rapport au chemin de papier.

11. Imprimante d'étiquettes selon l'une des revendications précédentes,
**caractérisée en ce que**
il est prévu une connexion par câble par laquelle l'autre récepteur de lumière (37, 37'), prévu sur l'élément de boîtier (25, 25'), ou la barrière lumineuse à réflexion (35, 35'), prévue sur l'élément de boîtier (25, 25'), est connecté(e) électriquement au boîtier d'imprimante (23, 23'), et/ou
**en ce qu'**il est prévu des éléments de contact électriques (41), par exemple des broches de contact à ressort, qui établissent un contact électrique entre le boîtier d'imprimante (23, 23') et l'autre récepteur de lumière (37, 37'), prévu sur la cassette (39), ou la barrière lumineuse à réflexion (35, 35'), prévue sur la cassette (39), lorsque la cassette (39) est mise en place dans l'espace de réception (27, 27').

12. Balance, en particulier balance de magasin, comprenant une imprimante d'étiquettes (19, 19') selon l'une des revendications précédentes.

13. Procédé de fonctionnement d'une imprimante d'étiquettes (19, 19') pour imprimer une bande de papier enroulée sur un rouleau, l'imprimante d'étiquettes (19, 19') comprenant :
un boîtier d'imprimante (23, 23') dans lequel est prévu un espace de réception (27, 27') pour le rouleau muni de la bande de papier ou pour une cassette (39) avec le rouleau muni de la bande de papier, la bande de papier pouvant être insérée dans un chemin de papier et pouvant être transportée le long du chemin de papier,
un élément de boîtier (25, 25') monté sur le boîtier d'imprimante (23, 23') et rabattable entre une position ouverte et une position fermée, lequel libère un accès à l'espace de réception (27, 27') pour la mise en place et le retrait du rouleau ou de la cassette (39) dans la position ouverte et l'empêche dans la position fermée,
procédé dans lequel
au moyen d'une unité de commande (21), l'état de l'imprimante d'étiquettes (19, 19') est détecté, à savoir il est détecté si l'élément de boîtier (25, 25') est fermé ou si la cassette (39) est mise en place et si la bande de papier est insérée dans le chemin de papier,
il est prévu une barrière lumineuse à réflexion (35, 35') munie d'un émetteur de lumière et d'un récepteur de lumière, et il est prévu un autre récepteur de lumière (37, 37'), la barrière lumineuse à réflexion (35, 35') étant prévue sur le boîtier d'imprimante (23, 23') et l'autre récepteur de lumière (37, 37') étant prévu sur l'élément de boîtier (25, 25') ou sur la cassette (39), ou
inversement, et dans l'état fermé de l'élément de boîtier (25, 25'), la barrière lumineuse à réflexion (35, 35') et l'autre récepteur de lumière (37, 37') sont disposés sur deux côtés opposés du chemin de papier,
un faisceau lumineux d'émission est émis par l'émetteur de lumière, une partie réfléchie du faisceau lumineux d'émission est reçue par le récepteur de lumière de la barrière lumineuse à réflexion (35, 35'), et une partie transmise du faisceau lumineux d'émission est reçue par l'autre récepteur de lumière (37, 37'),
**caractérisé en ce que**
au moyen de l'unité de commande (21), l'intensité de réception du récepteur de lumière de la barrière lumineuse à réflexion (35, 35') et l'intensité de réception de l'autre récepteur de lumière (37, 37') sont évaluées conjointement, et l'état de l'imprimante d'étiquettes (19, 19') est détecté sur la base de l'évaluation conjointe.

14. Procédé selon la revendication 13,
**caractérisé en ce que**
au moyen de l'unité de commande (21), lorsque le faisceau lumineux d'émission est émis par l'émetteur de lumière, il est détecté que l'élément de boîtier (25, 25') est ouvert ou que la cassette (39) n'est pas mise en place si l'intensité de réception du récepteur de lumière de la barrière lumineuse à réflexion (35, 35') est inférieure à une valeur de référence de réflexion prédéterminée et si l'intensité de réception de l'autre récepteur de lumière (37, 37') est inférieure à une valeur de référence de transmission prédéterminée, et il est détecté que dans le cas contraire, l'élément de boîtier (25, 25') est fermé ou la cassette est mise en place.

15. Procédé selon la revendication 14,
**caractérisé en ce que**
au moyen de l'unité de commande (21), lorsque l'émetteur de lumière est désactivé, c'est-à-dire lorsque l'émetteur de lumière n'émet pas de faisceau lumineux d'émission, il est détecté que l'élément de boîtier (25, 25') est ouvert ou que la cassette (39) n'est pas mise en place si l'intensité de réception du récepteur de lumière de la barrière lumineuse à réflexion (35, 35') est supérieure à une valeur limite de réflexion prédéterminée et/ou si l'intensité de réception de l'autre récepteur de lumière (37, 37') est supérieure à une valeur limite de transmission prédéterminée,
en particulier, la valeur limite de réflexion prédéterminée étant inférieure à la valeur de référence de réflexion prédéterminée et/ou la valeur limite de transmission prédéterminée étant inférieure à la valeur de référence de transmission prédéterminée.

16. Procédé selon l'une des revendications 14 à 15,
**caractérisé en ce que**
dans la mesure où il a été détecté que l'élément de boîtier (25, 25') est fermé ou que la cassette (39) est mise en place, il est ensuite détecté au moyen de l'unité de commande (21) si la bande de papier est insérée dans le chemin de papier.

17. Procédé selon l'une des revendications 13 à 16,
**caractérisé en ce que**
au moyen de l'unité de commande (21), lorsque le faisceau lumineux d'émission est émis par l'émetteur de lumière, il est détecté que la bande de papier n'est pas insérée dans le chemin de papier si l'intensité de réception du récepteur de lumière de la barrière lumineuse à réflexion (35, 35') est inférieure à une valeur seuil de réflexion prédéterminée ou si l'intensité de réception de l'autre récepteur de lumière (37, 37') est supérieure à une valeur seuil de transmission prédéterminée, et il est détecté que dans le cas contraire, la bande de papier est insérée dans le chemin de papier.

18. Procédé selon l'une des revendications 14 à 16 et la revendication 17,
**caractérisé en ce que**
la valeur seuil de réflexion prédéterminée est inférieure à la valeur de référence de réflexion prédéterminée, et/ou
**en ce que** la valeur seuil de transmission prédéterminée est supérieure à la valeur de référence de transmission prédéterminée.

19. Procédé selon l'une des revendications 13 à 18,
**caractérisé en ce que**
au moyen de l'unité de commande (21), le mode d'impression de l'imprimante d'étiquettes (19, 19') est bloqué si, sur la base de l'évaluation conjointe de l'intensité de réception du récepteur de lumière de la barrière lumineuse à réflexion (35, 35') et de l'intensité de réception de l'autre récepteur de lumière (37, 37'), il a été détecté que l'élément de boîtier (25, 25') est ouvert ou que la cassette (39) n'est pas mise en place ou que la bande de papier n'est pas insérée dans le chemin de papier.

20. Procédé selon l'une des revendications 13 à 19,
**caractérisé en ce que**
lorsque le faisceau lumineux d'émission est émis par l'émetteur de lumière, l'unité de commande (21) permet de distinguer, en se basant sur l'une au moins des deux intensités de réception, des types de bande de papier qui diffèrent les uns des autres en ce qui concerne leur pouvoir de réflexion et/ou leur perméabilité à la lumière, en particulier en ce qui concerne la dépendance locale de leur pouvoir de réflexion et/ou de leur perméabilité à la lumière dans la direction de la bande.

21. Procédé selon l'une des revendications 13 à 20,
**caractérisé en ce que**
au moyen de l'unité de commande (21), lorsque le faisceau lumineux d'émission est émis par l'émetteur de lumière et lorsque la bande de papier est insérée dans le chemin de papier et est transportée le long du chemin de papier, il est détecté, sur la base d'une évolution dans le temps de l'intensité de réception de l'autre récepteur de lumière (37, 37'), en particulier sur une durée prédéterminée, si la bande de papier est une bande de papier d'un premier type dont la perméabilité à la lumière varie dans la direction de la bande selon un schéma répétitif, en particulier une bande d'étiquettes, ou une bande de papier d'un deuxième type dont la perméabilité à la lumière est constante dans la direction de la bande, en particulier une bande sans fin,
en particulier, au moyen de l'unité de commande (21), il est détecté que la bande de papier est une bande de papier du premier type si l'évolution dans le temps de l'intensité de réception de l'autre récepteur de lumière (37, 37') passe d'une première valeur à une deuxième valeur qui diffère de la première valeur d'au moins une différence de référence prédéterminée, et il est détecté que dans le cas contraire, la bande de papier est une bande de papier du deuxième type.
